(19) Europäisches Patentamt
European Patent Office
Office européen des brevets

(11) **EP 3 139 489 B1**

(12) **EUROPEAN PATENT SPECIFICATION**

(45) Date of publication and mention
of the grant of the patent:
**20.06.2018 Bulletin 2018/25**

(51) Int Cl.:
***H02P 6/24*** *(2006.01)*      ***H02P 21/36*** *(2016.01)*

(21) Application number: **15425067.4**

(22) Date of filing: **04.09.2015**

(54) **METHOD FOR BRAKING AN ALTERNATING CURRENT ELECTRIC MOTOR**

VERFAHREN ZUM BREMSEN EINES WECHSELSTROMMOTORS

PROCÉDÉ DE FREINAGE D'UN MOTEUR ÉLECTRIQUE À COURANT ALTERNATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.03.2017 Bulletin 2017/10**

(73) Proprietor: **Gefran S.p.A.**
**25050 Provaglio d'Iseo (Brescia) (IT)**

(72) Inventor: **Vittorio, Alessandro**
**I-25050 Provaglio d'Iseo, Brescia (IT)**

(74) Representative: **Long, Giorgio**
**Jacobacci & Partners S.p.A.**
**Via Senato, 8**
**20121 Milano (IT)**

(56) References cited:
**EP-A1- 1 077 527      EP-A1- 2 869 460
EP-A2- 0 743 745      EP-A2- 2 763 308
US-A- 5 532 568**

**Description**

TECHNOLOGICAL BACKGROUND OF THE INVENTION

Field of application

The present invention relates to the sector of drives for alternating current electric motors in general. In particular, the invention relates to a method for braking an alternating current electric motor or asynchronous motor.

Prior art

Pulse Width Modulation or PWM frequency converters made by connecting a diode rectifier in series to an inverter which drives the motor are greatly used in the scope of variable speed electric drives for alternating current electric motors. The input of the diode rectifier is connected to an electric supply network.

Generally, such an inverter consists of a direct current/alternating current converter or DC/AC converter, configured to supply alternating voltage of adequate magnitude and frequency to impress an appropriate speed to the motor. The magnitude and frequency of such an alternating voltage may be modulated using known control methods of scalar type, e.g. a voltage/frequency scalar control or V/f control, or control methods of the vector type, e.g. field oriented control or FOC.

The electric energy usually flows from the power supply network through the diode rectifier and the PWM converter towards the electric motor, and thus towards the actuated load. In such conditions, the electric motor is configured to operate as motor, transforming the absorbed electric energy into mechanical energy.

In particular conditions, the electric motor is configured to operate as generator, by transforming the mechanical energy into electric energy. Such an energy is absorbed by the drive itself because it cannot be transferred to the electric supply network.

In order to prevent such energy absorbed from generating an excessive increase of the direct voltage on a capacitive circuit or DC-Link interposed between the aforesaid diode rectifier and the inverter, the drives of known type commonly use an energy dissipation unit, i.e. a circuit capable of conveying the energy generated by the braking into an appropriately dimensioned additional resistor (internal or external to the drive), indicated as braking chopper by those skilled in the art. The use of an additional dissipation circuit in the electric drives for induction motors has some disadvantages, particularly in the case of drives operating at powers higher than 200kW because of the costs and dimensions associated with the aforesaid energy dissipation circuit.

In order to mitigate the aforesaid disadvantages of the drives of known type, asynchronous electric motor braking methods have been recently suggested, which provide a step of increasing the magnetization of the motor following the generation of a torque disagreeing with the sense of rotation by the motor itself, i.e. at the beginning of a step of decelerating or braking of the motor in order to increase the losses by Joule effect in the motor itself, which allow to compensate for the energy produced by the motor during braking, maintaining the deceleration ramp unchanged.

As known, the power losses of the induction motors involve both the rotor and the stator. The most significant of these losses are the copper losses and the iron losses.

The copper losses are the Joule losses caused by the winding resistance of stator and by bar resistance of squirrel-cage rotor. In particular, such losses are proportional to the square of the current across the stator windings and square of the induced current in the bars of squirrel-cage rotor, respectively.

The iron losses are the losses due to eddy currents and rotor and stator magnetic core hysteresis. Such losses are proportional to the square of the magnetic stator flux and to the square of the magnetic rotor flux.

In particular, the aforesaid increase of magnetization concerns a reactive component of the induction motor current, i.e. the motor current component which is configured to generate the stator magnetic flux.

The deceleration ramp can be kept substantially unchanged, i.e. the braking time can be kept unchanged, by completely dissipating the power in excess supplied during the step of braking of the motor.

In some known braking methods, such an increase of magnetization is activated on the basis of detection of the crossing of a predetermined threshold by the voltage present at the terminals of the aforesaid DC-Link circuit.

However, such braking methods of known type also have limitations and drawbacks.

Indeed, the detection of the crossing of a threshold by the voltage present at the terminals of the DC-Link, depending on the charging times of the capacitor of the DC-Link itself, is inadequate as feedback information to follow the rapid changes during operation of the motor, which may rapidly go from the electric energy generator state, during braking, to the proper motor state, which absorbs energy from the inverter, or vice versa.

In other words, such a feedback information is often inaccurate or delayed with respect to actual operating state of the motor and therefore inadequate for many applications.

Document EP 2869460 A1 describes a motor control device capable of recovering regenerative energy while suppressing an excessively large regenerative current from flowing from the motor to the inverter.

Document EP 1077527 A1 describes a method of braking a vector controlled induction machine.

Document EP 0743745 A2 describes a controlling apparatus for induction motor.

## SUMMARY OF THE INVENTION

It is the object of the present invention to devise and make available a method for braking an alternating current electric motor or asynchronous motor, in particular three-phase, which allows to overcome at least partially the drawbacks described above with reference to the braking methods of known type based on the detection of the DC-Link voltage.

Such an object achieved by means of a method for braking an alternating current electric motor according to claim 1.

Preferred embodiments of such a braking method are described in dependent claims 2-12.

## BRIEF DESCRIPTION OF THE DRAWINGS

Further features and advantages of the method for braking an alternating current electric motor according to the invention will be apparent in the following description which illustrates preferred embodiments, given by way of indicative, non-limiting examples, with reference to the accompanying figures, in which:

- **figure 1** shows a functional block chart of an electronic control apparatus for an electric motor, which implements the braking method of the invention, according to an example of scalar type motor control;
- **figure 2** shows a functional block chart of an electronic control apparatus for an electric motor, which implements the braking method of the invention, according to an example of vector type motor control;
- **figure 3** shows a stator current of the motor controlled by the electronic control apparatus in figure 1 in a vector diagram related to a rotating reference system d-q;
- **figure 4** shows a functional block chart of a current transformation unit of the electronic control apparatus in figure 1 configured to generate a feedback signal indicative of an active current of the motor;
- **figure 5** shows a stator current of the motor controlled by the electronic control apparatus in figure 2 in a vector diagram related to a rotating reference system d-q;
- **figure 6** shows a functional block chart of a current transformation unit of the electronic control apparatus in figure 2 configured to generate a feedback signal indicative of an active current of the motor.

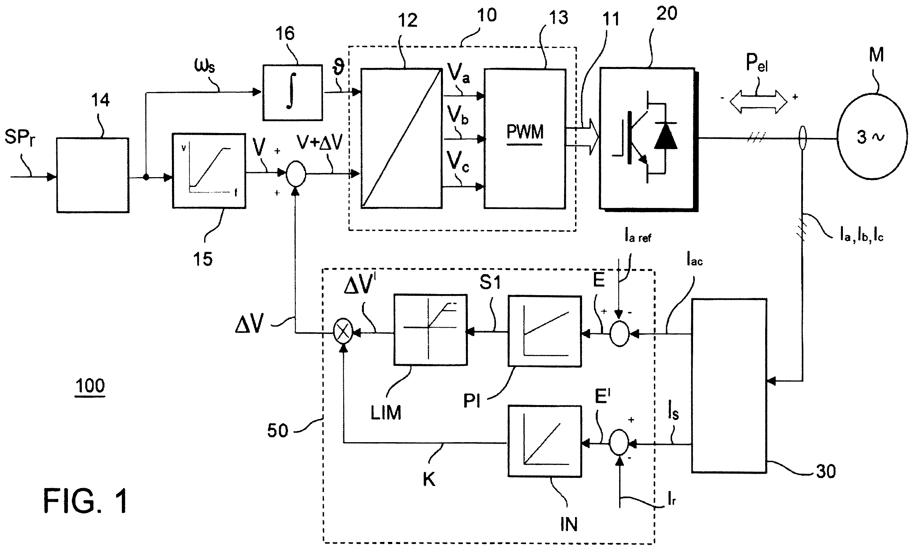

Similar or equivalent elements in the aforesaid figures 1-6 are indicated with the same reference numerals.

## DETAILED DESCRIPTION OF THE PREFERRED EMBODIMENTS

With reference to figures 1-2, a functional block chart of an electronic apparatus used in the industrial sector to output power for controlling the actuation of an alternating current (AC) electric motor according to the invention is indicated by reference numerals 100, 200 as a whole. Hereinafter, such an electronic control apparatus 100, 200 will be simply indicated as control apparatus.

It is worth noting that the aforementioned alternating current (AC) electric motor M is an asynchronous electric motor, in particular of the three-phase type. Such a motor is also known as three-phase induction electric motor. In general, such an electric motor M comprises a mobile rotor, e.g. of the squirrel-cage type or wound type, and a stator provided with conductor windings supplied by alternating current AC voltages.

With reference to the examples in figures 1-2, the control apparatus 100, 200 comprises a frequency converter stage 10, 10' configured to generate a plurality of Pulse Width Modulation PWM digital signals, indicated as a whole by reference numeral 11. Such PWM signals 11, generated on the basis of a first $V$, $Isd_{ref}$ and of a second $\theta$, $Isq_{ref}$ control signal, are adapted to start the actuation of motor M.

It is worth noting that the first control signal $V$, $Isd_{ref}$ is configured to control a magnetization current supplied to motor M, as explained below. Indeed, as known, the total current of an induction motor may be decomposed into two orthogonal components by means of an appropriate transformation of the reference system: a component, named torque, which directly influences the electromagnetic torque generated by the motor, and a component named magnetization or flux, which acts exclusively on the magnetic flux. In order not to alter the braking torque generated by the motor, only the magnetizing component of the current is increased during the braking process of the present invention.

The frequency converter stage 10, 10' comprises a conversion block 12, 12' and a PWM regulator 13, connected in series to each other. In particular, as known to a person skilled in art, the conversion block 12, 12' is configured to convert the first $V$, $Isd_{ref}$ and the second $\theta$, $Isq_{ref}$ control signal into a triad of voltages Va, Vb, Vc to be supplied to the PWM regulator 13.

The control apparatus 100, 200 further comprises a power stage 20 (power drive). Such a power stage 20 or inverter comprises, for example, a bridge circuit structure (not shown), in particular three-phase, including electronic power transistors, e.g. IGBT Insulated Gate Bipolar Transistors, of type known to a person skilled in the art. Such power stage 20 is configured to transfer electric power $P_{el}$ to the motor, e.g. by means of alternating currents Ia, Ib, Ic, to ensure the required speed (or torque) to the motor M itself, i.e. to actuate it.

It is worth noting that the electronic control apparatuses 100,200 which can be used in the method for braking an alternating current electric motor of the invention differ from each other for the control technique of the motor M used by the power stage 20.

With reference to figure 1, the electronic apparatus 100 implements a braking method for braking electric motors M controlled in scalar mode, in particular in voltage/frequency or V/f. As known, in V/f control mode, the magnetic flux associated with the stator of motor M depends on the ratio $V/\omega_s$ between the voltage V applied at the stator terminals and the pulse $\omega_s$, thus the frequency $f_s$, associated with the stator magnetic field. As known, the magnetization current of motor M may be increased by increasing such a ratio $V/\omega_s$. In case of constant pulse $\omega_s$ this is obtained by increasing the stator voltage V.

In particular, a speed ramp block 14 is configured to generate said stator pulse $\omega_s$ starting from a reference SPr indicative of the speed of motor M. Starting from the aforesaid stator pulse $\omega_s$, the voltage V applied at the stator terminals, corresponding to the aforesaid first control signal, can be obtained by means of a frequency-voltage conversion block 15, e.g. a table containing values of a characteristic curve V-f.

Instead, the aforesaid second control signal θ can be obtained by integrating the aforesaid pulse $\omega_s$ with a respective integration block 16.

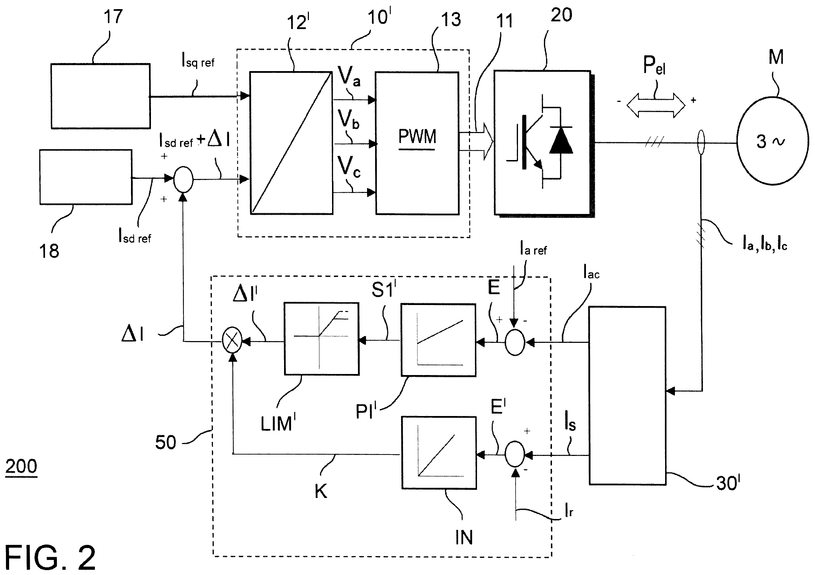

With reference to figure 2, the electronic control device 200 implements an electric motor M braking method controlled in vector mode, in particular in field oriented control mode. As known, in the field oriented control mode, the stator current can be decomposed into two orthogonal components with an appropriate choice of the d-q axes of a rotating system used by the frequency conversion block 10'. Such components, controlled in mutually independent manner, are the torque current Isq (which acts directly on the electromagnetic torque) and the magnetization or flux current Isd (which acts exclusively on the rotor magnetic flux).

A speed regulator block 17 (of known type) of the apparatus 200 is configured to generate a reference torque current $Isq_{ref}$, which corresponds to the second aforesaid control signal starting from a comparison between a speed reference and the actual speed of the motor.

A magnetic flux regulator block 18 (of known type) of the apparatus 200 is configured to generate a reference magnetizing current, $Isd_{ref}$, which corresponds to the aforesaid first control signal, starting from a rotor flux reference.

With reference to both embodiments of the motor control of figures 1-2, the braking method of the invention is described in detail below.

It is worth noting that the method suggested by the present invention has the purpose of maximizing the aforesaid copper power losses and iron power losses to compensate the energy generated during the step of braking the motor M.

Such a method comprises a step of detecting first current signals Ia, Ib, Ic indicative of actual currents absorbed by the motor M, i.e. the currents which pass through the stator windings of the motor M. Such actual currents Ia, Ib, Ic, in particular three-phase currents, are detected by means of an appropriate sensor associated with the motor M, e.g. a Hall sensor.

Furthermore, the braking method comprises a step of generating a feedback signal Iac indicative of an active current of the motor M starting from the aforesaid first current signals Ia, Ib, Ic.

Additionally, the method includes a step of comparing such a current feedback signal Iac with a reference current threshold Iaref, having theoretical value equal to zero, to generate a current error signal E, which can be obtained from:

$$E(t) = Iaref - Iac(t) \tag{1}$$

In particular, for levels of feedback signal Iac lower than such a current threshold Iaref=0, the method comprises the further steps of:

- generating an activation signal ΔV, ΔI starting from the current error signal E,
- summing such an activation signal ΔV, ΔI to the first control signal V, $Isd_{ref}$.

With reference to the control apparatus 100 in figure 1, the activation signal ΔV can be obtained as:

$$\Delta V(t) = K_p \cdot E(t) + K_i \cdot \int E(t)\,dt \tag{2}$$

where Kp (proportional coefficient) and Ki (integral coefficient) are constants programmable by the user on the basis of the rating plate data of motor M.

Such generated activation signal $\Delta V$ is a voltage signal. During the step of braking, motor M operates as energy generator towards inverter 20 and the feedback signal, i.e. the active current of the motor Iac, is lower than 0.

In such a case, the positive activation signal $\Delta V$ is summed to the first control signal V and an overall voltage signal $V+\Delta V$ is input to the frequency converter stage 10 to increase the magnetization current. In such a manner, the electric power dissipation is increased in motor M.

The first control signal V is increased, the stator pulse $\omega_s$ being equal.

Similarly, with reference to the control apparatus 200 in figure 2, the generated activation signal $\Delta I$ is a current signal.

During the step of braking M (the motor works as an energy generator towards inverter 20) such an activation signal $\Delta I$ is summed to the first control signal $Isd_{ref}$ and an overall current signal $Isd_{ref}+\Delta I$ is input to the frequency converter stage 10' to increase the magnetization current and increase the electric power dissipation in motor M.

Contrarily, for levels of feedback signal Iac higher than the current threshold Iaref=0, i.e. in the case in which the motor M absorbs electric energy from inverter 20, the method provides a step of inhibiting the generation of the activation signal $\Delta V$, $\Delta I$. In other words, no over fluxing action is performed, $\Delta V=0$ and $\Delta I=0$, when motor M is working as a proper motor.

According to a particular embodiment of the method for braking the electric motor M of the invention, the step of generating the aforesaid activation signal $\Delta V$, $\Delta I$ comprises the further steps of:

- sending the current error signal E to a proportional-integral block PI, PI' of the electronic apparatus 100, 200 to generate an intermediate signal S1, S1';
- limiting such an intermediate signal S1, S1' by means of a limiter block LIM, LIM' to generate a first activation signal $\Delta V=\Delta V'$, $\Delta I=\Delta I'$.

It is worth noting that the proportional-integral block PI, PI' is a functional block of known type configured to generate the intermediate voltage signal S1 (with reference to apparatus 100) or intermediate current signal S1' (with reference to apparatus 200).

The block limiter LIM, LIM' configured to generate the first activation signal $\Delta V'$, $\Delta I'$ is a functional block known in itself.

In other words, if the current error E persists over time the intermediate voltage signal S1 (or intermediate current signal S1') produced by the proportional-integral block PI (or PI') will assume increasingly greater positive values. The braking method will thus exert an increasingly stronger over-fluxing action. In order to avoid reaching excessively high values, the intermediate voltage signal S1 (or intermediate current signal S1') is saturated to a maximum limit by the limiter block LIM, LIM'.

Indeed, in an embodiment, the braking method provides that the step of limiting the intermediate signal S1, S1' by means of such limiter block LIM, LIM' comprises the further steps of:

- fixing a minimum threshold Smin of the limiter block LIM, LIM' equal to a constant threshold;
- fixing a maximum threshold Smax(t) of such a limiter block LIM, LIM' equal to a threshold which is variable over time.

In particular, such a minimum constant threshold Smin of the limiter block LIM, LIM' included in the control apparatus 100, 200 is equal to zero.

With reference to the apparatus 100 in figure 1, the maximum threshold Smax(t) variable over time in the limiter block LIM depends on the first control signal V.

With reference to the apparatus 200 in figure 2, the maximum threshold Smax(t) variable over time in the limiter block LIM' depends on the peak current which can be output by the power stage 20 and the total current required for controlling motor M.

In another embodiment of the braking method of the invention, the step of generating the activation signal $\Delta V$, $\Delta I$ further comprises a step of multiplying the first activation signal $\Delta V'$, $\Delta I'$ generated by the limiter LIM, LIM' for a dimensionless parameter K adapted to assume values comprised in the 0<K<1 range to decrease or, at most, cancel the activation signal $\Delta V$, $\Delta I$ itself.

In such a manner, the braking method of the invention allows to limit the voltage increase of the first voltage control signal $V+\Delta V$ and the current increase of the first current control signal $Isd_{ref}+\Delta I$ when inverter 20 is operating in overload condition.

In greater detail, such a step of multiplying the first activation signal $\Delta V'$, $\Delta I'$ for the parameter K comprises the further steps of:

- generating a first feedback signal Is indicative of a stator current of the motor M;
- comparing such a first current feedback signal Is with a first current threshold Ir, or nominal current of the converter, to generate an overcurrent signal E';
- feeding such an overcurrent signal E' to an input of an integrator block IN to generate such a parameter K as output.

In particular, the nominal current Ir indicates the maximum current that the converter may continuously output. The overcurrent signal E' is indicative of an overload current net of the nominal current Ir.

It is worth noting that the integrator block IN is also a functional block of known type.

It is worth noting that the integrator block IN prevents the prolonged overload condition of the drive.

Indeed, the over-magnetization may generate an increase of the total current beyond the nominal value of the drive/motor. As known, the inverter 20 and the motor M may support an overcurrent for a limited period of time. The integrator block IN implements an overload protection, i.e. gradually reduces the activation signal ΔV, ΔI to zero value in overload conditions generating the parameter K according to the equation:

$$K(t) = K_{ri} \cdot \int (I_s - I_r) dt \tag{3}$$

where Kri is a further constant programmable by the user according to the rating plate data of motor M. The integrator block IN generates a signal variable from 1 to 0 when the stator current Is exceeds the nominal current Ir.

In general, the proportional-integral functional block PI, PI', the limiter block LIM, LIM' and the integrator block IN of the control apparatuses 100 and 200 enclosed within a rectangle 50 drawn with a dashed line in figures 1-2 are software blocks stored in a memory of the aforesaid apparatuses and executable by a microprocessor.

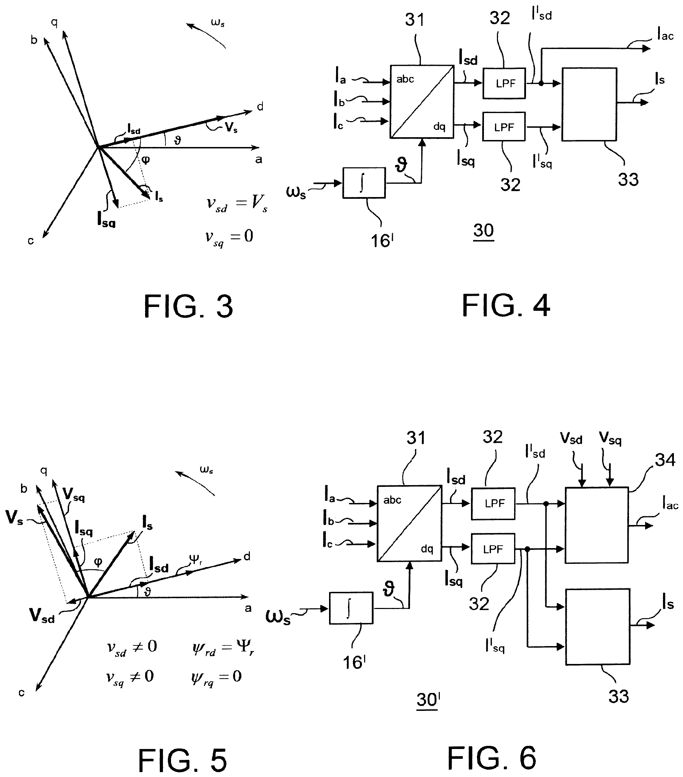

Further implementations of the braking method of the present invention may be described with reference to figures 3, 4, 5, 6.

In particular, figure 4 shows a functional block chart of a first current transformation unit 30 of the electronic control apparatus 100 in figure 1. Figure 6 shows a functional block chart of a second current transformation unit 30' of the electronic control apparatus 200 in figure 2.

In general, the first 30 and the second 30' current transformation units of the control apparatuses 100 and 200, respectively, represent software blocks stored in a memory of the aforesaid apparatuses and executable by a microprocessor.

Such current transformation units 30, 30' are configured to generate both the feedback signal Iac indicative of an active current of the motor M and a first feedback signal Is indicative of the stator current of the motor.

In greater detail, with reference to the control apparatus 100, the step of generating the feedback signal Iac of the proposed braking method comprises the further steps of:

- feeding the first current signals Ia, Ib, Ic to the first current transformation unit 30;
- converting, by means of a converter 31, such first current signals Ia, Ib, Ic from a fixed reference system a,b,c to a rotating reference system d, q to obtain a first Isd and a second Isq transformed current signals;
- filtering, e.g. by means of a low-pass filter 32, the first transformed current signal Isd to generate the feedback signal Iac.

It is worth noting that the converter 31 converts the first current signals Ia, Ib, Ic on the basis of the information associated with the second control signal θ obtained by integrating the stator pulse $\omega_s$ by means of an integrator block 16'. The filtering performed with filters 32 allows to eliminate the harmonic components and the high frequency noise. The root mean square (rms) value of the feedback signal Iac, i.e. the active current, can be calculated by means of the first block 33 on the basis of the following equation:

$$Iac = \frac{1}{\sqrt{2}} \cdot I'_{sd} \quad rms \tag{4}$$

With reference to the control apparatus 200, the step of generating the feedback signal Iac of the proposed braking method comprises the further steps of:

- feeding the first current signals Ia, Ib, Ic to the second current transformation unit 30';
- converting, by means of the converter 31, the first current signals Ia, Ib, Ic from the fixed reference system (a,b,c) to the rotating reference system d,q to obtain the first Isd and the second Isq transformed current signals;

- filtering, e.g. by means of a low-pass filter 32, such first Isd and second Isq transformed current signals to generate a first I'sd and a second I'sq filtered current signals;
- combining the first I'sd and the second I'sq filtered current signals with a first Vsd and a second Vsq voltage signals to generate the aforesaid feedback signal Iac.

In greater detail, the first Vsd and the second Vsq voltage signals are the components (or projections) on axes "d" and "q" of the vector Vs indicative of the voltage triad Va, Vb and Vc generated by the converter and applied to the terminals of the induction motor M. With reference to the vector diagrams in figures 3 and 5, the vector Vs turns on the plane at angular speed ωs (ωs = 2*π*fs, where fs is the stator voltage frequency) together with the reference system d-q, with respect to the fixed reference "abc".

As known, in vector type controls, the axes "d" and "q" are usually chosen so that the direction of axis "d" coincides with that of the vector representative of the rotor magnetic flux ψr.

In the case of scalar control, for calculation simplicity of the active component of the current Iac, it is preferred to adopt a rotating reference d-q with axis d aligned with the voltage vector Vs.

With reference to the solution in figure 6, in the chosen reference system d-q, the feedback signal Iac is calculated by means of the second block 34 on the basis of the equation:

$$\mathrm{Iac} = \frac{3}{\sqrt{2}} \cdot \frac{V_{sd} * I'_{sd} + V_{sq} * I'_{sq}}{V_s} \quad \mathrm{rms} \tag{5}$$

With reference to both control devices 100, 200, in relation to the step of generating the first feedback signal Is indicative of the stator current of motor M, the suggested braking method comprises the further steps of:

- feeding the first current signals Ia, Ib, Ic to the first (or second) current transformation unit 30 (or 30');
- converting such first current signals Ia, Ib, Ic from a fixed reference system a,b,c to a rotating reference system d,q to obtain the first Isd and the second Isq transformed current signals;

- filter both the first Isd and the second Isq transformed current signals, e.g. by means of low-pass filter 32, to generate the first I'sd and the second I'sq filtered current signals;
- calculating the square root of the sum of the squares of such first I'sd and second I'sq filtered current signals to generate such first feedback signal Is.

In particular, the first feedback signal Is can be obtained by means of the first block 33, on the basis of the equation:

$$\mathrm{Is} = \frac{1}{\sqrt{2}} \cdot \sqrt{I'_{sd}{}^2 + I'_{sq}{}^2} \quad \mathrm{rms} \tag{6}$$

It is worth noting that the braking method of the invention can be advantageously applied in a rotation speed range of the motor lower than the nominal speed of the motor itself. In other words, the present invention is applicable for PWM control voltages having magnitude lower than the maximum magnitude applicable to the drive.

The method for braking alternating current (AC) motors M of the present invention has many advantages.

In particular, using the active component Iac of the motor current as feedback signal of the braking method is advantageous with respect to measuring the voltage in the DC-Link circuit of the known methods because it allows to obtain a faster response to changes of operation of motor M, from proper motor to generator, and vice versa.

Indeed, measuring the active current Iac of the motor supplies a substantially instantaneous feedback signal on the actual operation of motor M, which is more rapid that the feedback signal related to the raising or lowering of the DC-link voltage, the dynamics of which depends on the capacitance C of the filter of the intermediate circuit.

In other words, the active current Iac of the motor provides a direct, accurate indication of the charge state of the intermediate circuit associated with the control apparatus 100,200 by motor M during the steps of braking, i.e. when the motor operates as generator.

Furthermore, the voltage fluctuations of the AC voltage of the power supply network may increase or decrease the voltage level of the DC-Link regardless of the operation of motor M and therefore add noise to such a signal, making it even more unreliable as feedback signal. The method of the invention is immune from such a drawback because the feedback signal indicative of the active current Iac of the motor is substantially immune from the supply network voltage fluctuations.

In some industrial applications, such as for example fans and centrifuges, the braking method of the invention can be applied to dissipate the braking energy without using an additional energy dissipation circuit, i.e. an additional dissipation resistor.

In other applications, the braking method of the invention can be used, in a drive, in association with an additional dissipation resistor. In such other applications, the Applicant has verified that the use of the present braking method advantageously allows to dissipate the same amount of braking energy in excess by using a smaller size dissipation resistor. This allows a saving in terms of costs and dimensions associated with such a dissipation resistor.

Those skilled in art can make changes and adaptations to the embodiments of a braking method described above or can replace elements with others which are functionally equivalent to satisfy contingent needs without departing from the scope of the appended claims. All the features described above as belonging to one possible embodiment may be implemented independently from the other embodiments described.

**Claims**

1. Method for braking an alternating current (AC) electric motor (M), wherein said motor can be actuated by means of an electronic control apparatus (100; 200) comprising:

   - a frequency converter stage (10; 10'), adapted to generate a plurality of Pulse Width Modulation PWM digital signals (11) on the basis of a first (V; $Isd_{ref}$) and a second ($\theta$; $Isq_{ref}$) control signals;
   - a power stage (20), adapted to transfer electric power (Pel) to the motor (M) to actuate it on the basis of said digital signals (11),

   said first control signal (V; $Isd_{ref}$) being configured to control a magnetization current supplied to the motor (M), said method comprising the steps of:

   - detecting first current signals (Ia, Ib, Ic) indicative of actual currents absorbed by the motor (M);
   - generating a feedback signal (Iac) indicative of an active current of the motor (M) starting from said first current signals (Ia, Ib, Ic);
   - comparing said current feedback signal (Iac) with a current threshold (Iaref) to generate a current error signal (E), wherein:

      for levels of feedback signal (Iac) lower than said current threshold (Iaref), the method comprises the further steps of:

         - generating an activation signal ($\Delta$V; $\Delta$I) starting from said current error signal (E);
         - summing said activation signal ($\Delta$V; $\Delta$I) to said first control signal (V; $Isd_{ref}$) to increase said magnetization current to increase an electric power dissipation in the motor;

      for levels of feedback signal (Iac) higher than said current threshold (Iaref), inhibiting the generation of the activation signal ($\Delta$V; $\Delta$I).

2. Method for braking an alternating current (AC) electric motor (M) according to claim 1, wherein said step of generating the activation signal ($\Delta$V; $\Delta$I) comprises the further steps of:

   - sending said current error signal (E) to a proportional-integral block (PI; PI') of the electronic control apparatus (100, 200) to generate an intermediate signal (S1; S1');
   - limiting said intermediate signal (S1; S1') by means of a limiter block (LIM; LIM') to generate a first activation signal ($\Delta$V'; $\Delta$I') representative of said activation signal ($\Delta$V; $\Delta$I).

3. Method for braking an alternating current (AC) electric motor (M) according to claim 2, wherein said step of generating the activation signal ($\Delta$V; $\Delta$I) further comprises a step of multiplying said first activation signal ($\Delta$V'; $\Delta$I) by a parameter (K) adapted to assume values comprised in the range 0<K<1 to decrease or, at the most, cancel said activation signal ($\Delta$V; $\Delta$I).

4. Method for braking an alternating current (AC) electric motor (M) according to claim 3, wherein said step of multiplying the first activation signal ($\Delta$V'; $\Delta$I') for said parameter (K) comprises the further steps of:

- generating a first feedback signal (Is) indicative of a stator current of the motor (M);
- comparing said first current feedback signal (Is) with a first current threshold (Ir) to generate an overcurrent signal (E');
- feeding said overcurrent signal (E') to an input of an integrator block (IN) to generate as output said parameter (K).

5. Method for braking an alternating current (AC) electric motor (M) according to claim 1, wherein said step of generating the feedback signal (Iac) indicative of an active current of the motor (M) comprises the further steps of:

- feeding said first current signals (Ia, Ib, Ic) to a current transformation block (30) of the electronic control apparatus (100);
- converting said first current signals (Ia, Ib, Ic) from a fixed reference system (a,b,c) to a rotating reference system (d,q) to obtain a first (Isd) and a second (Isq) transformed current signal;
- filtering said first transformed current signal (Isd) to generate said feedback signal (Ia).

6. Method for braking an alternating current (AC) electric motor (M) according to claim 1, wherein said step of generating the feedback signal (Iac) indicative of an active current of the motor (M) comprises the further steps of:

- feeding said first current signals (Ia, Ib, Ic) to a current transformation block (30) of the electronic control apparatus (200);
- converting said first current signals (Ia, Ib, Ic) from a fixed reference system (a,b,c) to a rotating reference system (d,q) to obtain a first (Isd) and a second (Isq) transformed current signals;
- filtering said first (Isd) and second (Isq) transformed current signals to generate a first (I'sd) and a second (I'sq) filtered current signals;
- combining the first (I'sd) and the second (I'sq) filtered current signals with a first (Vsd) and a second (Vsq) voltage signal to generate said feedback signal (Iac).

7. Method for braking an alternating current (AC) electric motor (M) according to claim 4, wherein said step of generating a first feedback signal (Is) indicative of a stator current of the motor (M) comprises the further steps of:

- feeding said first current signals (Ia, Ib, Ic) to a current transformation block (30; 30') of the electronic control apparatus (100;200);
- converting said first current signals (Ia, Ib, Ic) from a fixed reference system (a,b,c) to a rotating reference system (d,q) to obtain a first (Isd) and a second (Isq) transformed current signals;
- filtering said first (Isd) and said second (Isq) transformed current signals to generate a first (I'sd) and a second (I'sq) filtered current signals;
- calculating the square root of the sum of the squares of said first (I'sd) and second (I'sq) filtered current signals to generate said first feedback signal (Is).

8. Method for braking an alternating current (AC) electric motor (M) according to claims 5-7, wherein said step of filtering consists of a low-pass filtering.

9. Method for braking an alternating current (AC) electric motor (M) according to claim 2, wherein said step of limiting said intermediate signal (S1; S1') by means of a limiter block (LIM; LIM') comprises the further steps of:

- fixing a minimum threshold (Smin) of said limiter block (LIM; LIM') equal to a constant threshold;
- fixing a maximum threshold (Smax(t)) of said limiter block (LIM; LIM') equal to a threshold which is variable over time.

10. Method for braking an alternating current (AC) electric motor (M) according to claim 9, wherein said constant minimum threshold (Smin) of the limiter block (LIM; LIM') is equal to zero.

11. Method for braking an alternating current (AC) electric motor (M) according to claim 9, wherein said maximum threshold (Smax(t)) variable over time of the limiter block (LIM) depends on the first control signal (V) .

12. Method for braking an alternating current (AC) electric motor (M) according to claim 9, wherein said maximum threshold (Smax(t)) variable over time of the limiter block (LIM') depends on the peak current which can be output by the power stage (20) and the total current required for controlling the motor (M).

**Patentansprüche**

1. Verfahren zum Bremsen eines Wechselstrom-(AC)-Elektromotors (M), wobei der Motor mittels einer elektronischen Steuerungs-/Regelungsvorrichtung (100; 200) betätigt werden kann, welche umfasst:

   - eine Frequenzwandlerstufe (10; 10'), welche dazu eingerichtet ist eine Mehrzahl von Pulsweitenmodulation-PWM-Digitalsignalen (11) auf der Grundlage eines ersten (V; Isd$_{ref}$) und eines zweiten ($\theta$, Isq$_{ref}$) Steuerungs-/Regelungssignals zu erzeugen;
   - eine Leistungsstufe (20), welche dazu eingerichtet ist, elektrische Leistung (Pel) zu dem Motor (M) zu übertragen, um diesen auf der Grundlage der Digitalsignale (11) zu betätigen,
   - wobei das erste Steuerungs-/Regelungssignal (V; Isd$_{ref}$) dazu eingerichtet ist, einen Magnetisierungsstrom zu steuern/regeln, welcher dem Motor (M) bereitgestellt wird,

   wobei das Verfahren die folgenden Schritte umfasst:

   - Erfassen erster Stromsignale (Ia, Ib, Ic), welche tatsächliche durch den Motor (M) aufgenommene Ströme anzeigen;
   - Erzeugen eines Rückkopplungssignals (Iac), welches einen Wirkstrom des Motors (M) beginnend mit den ersten Stromsignalen (Ia, Ib, Ic) anzeigt;
   - Vergleichen des Strom-Rückkopplungssignals (Iac) mit einer Stromschwelle (Iaref), um ein Stromfehlersignal (E) zu erzeugen, wobei:

     das Verfahren für Pegel des Rückkopplungssignals (Iac), welche geringer als die Stromschwelle (Iaref) sind, die weiteren Schritte umfasst:

     - Erzeugen eines Aktivierungssignals ($\Delta$V; $\Delta$I) beginnend mit dem Stromfehlersignal (E);
     - Summieren des Aktivierungssignals ($\Delta$V; $\Delta$I) auf das erste Steuerungs-/Regelungssignal (V; Isd$_{ref}$), um den Magnetisierungsstrom zu erhöhen, um einen elektrischen Leistungsverlust in dem Motor zu erhöhen;

     für Pegel des Rückkopplungssignals (Iac), welche höher als die Stromschwelle (Iaref) sind, Verhindern des Erzeugens des Aktivierungssignals ($\Delta$V; $\Delta$I).

2. Verfahren zum Bremsen eines Wechselstrom-(AC)-Elektromotors (M) nach Anspruch 1, wobei der Schritt des Erzeugens des Aktivierungssignals ($\Delta$V; $\Delta$I) die weiteren Schritte umfasst:

   - Senden des Stromfehlersignals (E) an einen Proportional-Integralblock (PI; PI') der elektronischen Steuerungs-/Regelungsvorrichtung (100, 200), um ein Zwischensignal (S1; S1') zu erzeugen;
   - Begrenzen des Zwischensignals (S1; S1') mittels eines Begrenzungsblocks (LIM; LIM') um ein erstes Aktivierungssignal ($\Delta$V'; $\Delta$I') zu erzeugen, welches repräsentativ für das Aktivierungssignal ($\Delta$V; $\Delta$I) ist.

3. Verfahren zum Bremsen eines Wechselstrom-(AC)-Elektromotors (M) nach Anspruch 2, wobei der Schritt des Erzeugens des Aktivierungssignals ($\Delta$V; $\Delta$I) ferner einen Schritt eines Multiplizierens des ersten Aktivierungssignals ($\Delta$V'; $\Delta$I') mit einem Parameter (K) umfasst, welcher dazu eingerichtet ist, Werte anzunehmen, welche in dem Bereich $0<K<1$ umfasst sind, um das Aktivierungssignal ($\Delta$V; $\Delta$I) zu verringern oder maximal aufzuheben.

4. Verfahren zum Bremsen eines Wechselstrom-(AC)-Elektromotors (M) nach Anspruch 3, wobei der Schritt des Multiplizierens des ersten Aktivierungssignals ($\Delta$V'; $\Delta$I') für den Parameter (K) die weiteren Schritte umfasst:

   - Erzeugen eines ersten Rückkopplungssignals (Is), welches einen Statorstrom des Motors (M) anzeigt;
   - Vergleichen des ersten Strom-Rückkopplungssignals (Is) mit einer ersten Stromschwelle (Ir), um ein Überstromsignal (E') zu erzeugen;
   - Zuführen des Überstromsignals (E') zu einem Eingang eines Integratorblocks (IN), um den Parameter (K) als Ausgang zu erzeugen.

5. Verfahren zum Bremsen eines Wechselstrom-(AC)-Elektromotors (M) nach Anspruch 1, wobei der Schritt des Erzeugens des Rückkopplungssignals (Iac), welches einen Wirkstrom des Motors (M) anzeigt, die weiteren Schritte umfasst:

- Zuführen der ersten Stromsignale (Ia, Ib, Ic) zu einem Stromtransformationsblock (30) der elektronischen Steuerungs-/Regelungsvorrichtung (100);
- Wandeln der ersten Stromsignale (Ia, Ib, Ic) von einem festen Referenzsystem (a, b, c) in ein rotierendes Referenzsystem (d, q), um ein erstes (Isd) und ein zweites (Isq) transformiertes Stromsignal zu erhalten;
- Filtern des ersten transformierten Stromsignals (Isd), um das Rückkopplungssignal (Ia) zu erzeugen.

6. Verfahren zum Bremsen eines Wechselstrom-(AC)-Elektromotors (M) nach Anspruch 1, wobei der Schritt des Erzeugens des Rückkopplungssignals (Iac), welches einen Wirkstrom des Motors (M) anzeigt, die weiteren Schritte umfasst:

- Zuführen der ersten Stromsignale (Ia, Ib, Ic) zu einem Stromtransformationsblock (30) der elektronischen Steuerungs-/Regelungsvorrichtung (200);
- Wandeln der ersten Stromsignale (Ia, Ib, Ic) von einem festen Referenzsystem (a, b, c) in ein rotierendes Referenzsystem (d, q), um ein erstes (Isd) und ein zweites (Isq) transformiertes Stromsignal zu erhalten;
- Filtern des ersten (Isd) und des zweiten (Isq) transformierten Stromsignals, um ein erstes (I'sd) und ein zweites (I'sq) gefiltertes Stromsignal zu erzeugen;
- Kombinieren des ersten (I'sd) und des zweiten (I'sq) gefilterten Stromsignals mit einem ersten (Vsd) und einem zweiten (Vsq) Spannungssignal um das Rückkopplungssignal (Iac) zu erzeugen.

7. Verfahren zum Bremsen eines Wechselstrom-(AC)-Elektromotors (M) nach Anspruch 4, wobei der Schritt des Erzeugens eines ersten Rückkopplungssignals (Is), welches einen Statorstrom des Motors (M) anzeigt, die weiteren Schritte umfasst:

- Zuführen der ersten Stromsignale (Ia, Ib, Ic) zu einem Stromtransformationsblock (30; 30') der elektronischen Steuerungs-/Regelungsvorrichtung (100; 200);
- Wandeln der ersten Stromsignale (Ia, Ib, Ic) von einem festen Referenzsystem (a, b, c) in ein rotierendes Referenzsystem (d, q), um ein erstes (Isd) und ein zweites (Isq) transformiertes Stromsignal zu erhalten;
- Filtern des ersten (Isd) und des zweiten (Isq) transformierten Stromsignals, um ein erstes (I'sd) und ein zweites (I'sq) gefiltertes Stromsignal zu erzeugen;
- Berechnen der Quadratwurzel der Summe der Quadrate des ersten (I'sd) und des zweiten (I'sq) gefilterten Stromsignals, um ein erstes Rückkopplungssignal (Is) zu erzeugen.

8. Verfahren zum Bremsen eines Wechselstrom-(AC)-Elektromotors (M) nach den Ansprüchen 5-7, wobei der Schritt des Filterns aus einem Tiefpassfiltern besteht.

9. Verfahren zum Bremsen eines Wechselstrom-(AC)-Elektromotors (M) nach Anspruch 2, wobei der Schritt des Begrenzens des Zwischensignals (S1; S1') mittels eines Begrenzungsblocks (LIM; LIM') die weiteren Schritte umfasst:

- Festlegen einer Mindestschwelle (Smin) des Begrenzungsblocks (LIM; LIM'), welche gleich einer konstanten Schwelle ist;
- Festlegen einer Maximalschwelle (Smax(t)) des Begrenzungsblocks (LIM; LIM'), welche gleich einer Schwelle ist, welche variabel über der Zeit ist.

10. Verfahren zum Bremsen eines Wechselstrom-(AC)-Elektromotors (M) nach Anspruch 9, wobei die konstante Mindestschwelle (Smin) des Begrenzungsblocks (LIM; LIM') gleich null ist.

11. Verfahren zum Bremsen eines Wechselstrom-(AC)-Elektromotors (M) nach Anspruch 9, wobei die über der Zeit variable Maximalschwelle (Smax(t)) des Begrenzungsblocks (LIM) von dem ersten Steuerungs-/Regelungssignal (V) abhängt.

12. Verfahren zum Bremsen eines Wechselstrom-(AC)-Elektromotors (M) nach Anspruch 9, wobei die über der Zeit variable Maximalschwelle (Smax(t)) des Begrenzungsblocks (LIM') von dem Spitzenstrom, welcher von der Leistungsstufe (20) abgegeben wird, und dem Gesamtstrom abhängt, welcher für das Steuern/Regeln des Motors (M) erforderlich ist.

**Revendications**

1. Procédé de freinage d'un moteur (M) électrique à courant alternatif (AC), dans lequel ledit moteur peut être actionné au moyen d'un appareil de commande électronique (100 ; 200) comprenant :

   - un étage de convertisseur de fréquence (10 ; 10'), adapté pour générer une pluralité de signaux numériques (11) de modulation de largeur d'impulsion PWM sur la base d'un premier (V ; $Isd_{ref}$) et d'un deuxième ($\theta$, $Isq_{ref}$) signal de commande ;
   - un étage de puissance (20), adapté pour transférer une puissance électrique (Pel) au moteur (M) pour l'actionner sur la base desdits signaux numériques (11),

   ledit premier signal de commande (V ; $Isd_{ref}$) étant configuré pour commander un courant de magnétisation fourni au moteur (M),
   ledit procédé comprenant les étapes de :

   - détection de premiers signaux de courant (Ia, Ib, Ic) indiquant des courants actuels absorbés par le moteur (M) ;
   - génération d'un signal de rétroaction (Iac) indiquant un courant actif du moteur (M) partant desdits premiers signaux de courant (Ia, Ib, Ic) ;
   - comparaison dudit signal de rétroaction de courant (Iac) avec un seuil de courant (Iaref) pour générer un signal d'erreur de courant (E), dans lequel :

      pour des niveaux de signal de rétroaction (Iac) inférieurs audit seuil de courant (Iaref), le procédé comprend les étapes supplémentaires de :

      - génération d'un signal d'activation ($\Delta V$ ; $\Delta I$) partant dudit signal d'erreur de courant (E) ;
      - addition dudit signal d'activation ($\Delta V$ ; $\Delta I$) audit premier signal de commande (V ; $Isd_{ref}$) pour augmenter ledit courant de magnétisation pour augmenter une dissipation de puissance électrique dans le moteur ;

      pour des niveaux de signal de rétroaction (Iac) supérieurs audit seuil de courant (Iaref), inhibition de la génération du signal d'activation ($\Delta V$ ; $\Delta I$).

2. Procédé de freinage d'un moteur (M) électrique à courant alternatif (AC) selon la revendication 1, dans lequel ladite étape de génération du signal d'activation ($\Delta V$ ; $\Delta I$) comprend les étapes supplémentaires de :

   - envoi dudit signal d'erreur de courant (E) à un bloc proportionnel-intégral (PI ; PI') de l'appareil de commande électronique (100, 200) pour générer un signal intermédiaire (S1 ; S1') ;
   - limitation dudit signal intermédiaire (S1 ; S1') au moyen d'un bloc limiteur (LIM ; LIM') pour générer un premier signal d'activation ($\Delta V'$ ; $\Delta I'$) représentatif du dit signal d'activation ($\Delta V$ ; $\Delta I$).

3. Procédé de freinage d'un moteur (M) électrique à courant alternatif (AC) selon la revendication 2, dans lequel ladite étape de génération du signal d'activation ($\Delta V$ ; $\Delta I$) comprend en outre une étape de multiplication dudit premier signal d'activation ($\Delta V'$ ; $\Delta I'$) par un paramètre (K) adapté pour adopter des valeurs comprises dans la plage 0<K<1 pour diminuer, ou au plus, annuler ledit signal d'activation ($\Delta V$ ; $\Delta I$).

4. Procédé de freinage d'un moteur (M) électrique à courant alternatif (AC) selon la revendication 3, dans lequel ladite étape de multiplication du premier signal d'activation ($\Delta V'$ ; $\Delta I'$) pour ledit paramètre (K) comprend les étapes supplémentaires de :

   - génération d'un premier signal de rétroaction (Is) indicatif d'un courant de stator du moteur (M) ;
   - comparaison dudit premier signal de rétroaction de courant (Is) avec un premier seuil de courant (Ir) pour générer un signal de surintensité (E') ;
   - alimentation dudit signal de surintensité (E') à une entrée d'un bloc intégrateur (IN) pour générer en tant que sortie ledit paramètre (K).

5. Procédé de freinage d'un moteur (M) électrique à courant alternatif (AC) selon la revendication 1, dans lequel ladite étape de génération du signal de rétroaction (Iac) indicatif d'un courant actif du moteur (M) comprend les étapes supplémentaires de :

- alimentation desdits premiers signaux de courant (Ia, Ib, Ic) à un bloc de transformation de courant (30) de l'appareil de commande électronique (100) ;
- conversion desdits premiers signaux de courant (Ia, Ib, Ic) d'un système de référence fixe (a, b, c) en un système de référence rotatif (d, q) pour obtenir un premier (Isd) et un deuxième (Isq) signal de courant transformé ;
- filtrage dudit premier signal de courant transformé (Isd) pour générer ledit signal de rétroaction (Ia).

6. Procédé de freinage d'un moteur (M) électrique à courant alternatif (AC) selon la revendication 1, dans lequel ladite étape de génération du signal de rétroaction (Iac) indicatif un courant actif du moteur (M) comprend les étapes supplémentaires de :

- alimentation desdits premiers signaux de courant (Ia, Ib, Ic) à un bloc de transformation de courant (30) de l'appareil de commande électronique (200) ;
- conversion desdits premiers signaux de courant (Ia, Ib, Ic) d'un système de référence fixe (a, b, c) en un système de référence rotatif (d, q) pour obtenir un premier (Isd) et un deuxième (Isq) signal de courant transformé ;
- filtrage desdits premier (Isd) et deuxième (Isq) signaux de courant transformés pour générer un premier (I'sd) et un deuxième (I'sq) signal de courant filtré ;
- combinaison du premier (I'sd) et du deuxième (I'sq) signal de courant filtré avec un premier (Vsd) et un deuxième (Vsq) signal de tension pour générer ledit signal de rétroaction (Iac).

7. Procédé de freinage d'un moteur (M) électrique à courant alternatif (AC) selon la revendication 4, dans lequel ladite étape de génération d'un premier signal de rétroaction (Is) indicatif un courant de stator du moteur (M) comprend les étapes supplémentaires de :

- alimentation desdits premiers signaux de courant (Ia, Ib, Ic) à un bloc de transformation de courant (30 ; 30') de l'appareil de commande électronique (100 ; 200) ;
- conversion desdits premiers signaux de courant (Ia, Ib, Ic) d'un système de référence fixe (a, b, c) en un système de référence rotatif (d, q) pour obtenir un premier (Isd) et un deuxième (Isq) signal de courant transformé ;
- filtrage dudit premier (Isd) et dudit deuxième (Isq) signal de courant transformé pour générer un premier (I'sd) et un deuxième (I'sq) signal de courant filtré ;
- calcul de la racine carrée de la somme des carrés des dits premier (I'sd) et deuxième (I'sq) signaux de courant filtrés pour générer ledit premier signal de rétroaction (Is).

8. Procédé de freinage d'un moteur (M) électrique à courant alternatif (AC) selon les revendications 5-7, dans lequel ladite étape de filtrage consiste en un filtrage passe-bas.

9. Procédé de freinage d'un moteur (M) électrique à courant alternatif (AC) selon la revendication 2, dans lequel ladite étape de limitation dudit signal intermédiaire (S1 ; S1') au moyen d'un bloc limiteur (LIM ; LIM') comprend les étapes supplémentaires de :

- fixation d'un seuil minimum (Smin) dudit bloc limiteur (LIM ; LIM') égal à un seuil constant ;
- fixation d'un seuil maximum (Smax(t)) dudit bloc limiteur (LIM ; LIM') égal à un seuil qui est variable au cours du temps.

10. Procédé de freinage d'un moteur (M) électrique à courant alternatif (AC) selon la revendication 9, dans lequel ledit seuil minimum (Smin) constant du bloc limiteur (LIM ; LIM') est égal à zéro.

11. Procédé de freinage d'un moteur (M) électrique à courant alternatif (AC) selon la revendication 9, dans lequel ledit seuil maximum (Smax(t)) variable au cours du temps du bloc limiteur (LIM) dépend du premier signal de commande (V).

12. Procédé de freinage d'un moteur (M) électrique à courant alternatif (AC) selon la revendication 9, dans lequel ledit seuil maximum (Smax(t)) variable au cours du temps du bloc limiteur (LIM') dépend du courant de crête qui peut être émis par l'étage de puissance (20) et le courant total requis pour la commande du moteur (M).

FIG. 1

FIG. 2

EP 3 139 489 B1

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2869460 A1
- EP 1077527 A1
- EP 0743745 A2